(19) Europäisches Patentamt
European Patent Office
Office européen des brevets

(11) **EP 3 654 527 A1**

(12) **DEMANDE DE BREVET EUROPEEN**

(43) Date de publication:
**20.05.2020 Bulletin 2020/21**

(51) Int Cl.:
*H02S 50/00* (2014.01)    *G06F 30/00* (2020.01)
*G06F 111/10* (2020.01)

(21) Numéro de dépôt: **19208796.3**

(22) Date de dépôt: **13.11.2019**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **14.11.2018 FR 1860499**

(71) Demandeur: **Commissariat à l'Energie Atomique et aux Energies Alternatives
75015 Paris (FR)**

(72) Inventeur: **LESPINATS, Sylvain
38054 GRENOBLE CEDEX 9 (FR)**

(74) Mandataire: **Cabinet Camus Lebkiri
25 rue de Maubeuge
75009 Paris (FR)**

(54) **PROCEDE DE DETERMINATION D'UN MODELE ELECTRIQUE D'UNE CHAINE DE MODULES PHOTOVOLTAÏQUE, PROCEDE DE DIAGNOSTIC ET DISPOSITIF ASSOCIES**

(57)    Un aspect de l'invention concerne un procédé (100) de détermination d'un modèle électrique d'une chaine de modules photovoltaïques à partir d'une caractéristique I(V) de ladite chaine comprenant : une étape (E2) de détection d'une première zone linéaire et d'une deuxième zone linéaire de la caractéristique I(V) ; une étape (E3) d'initialisation des paramètres d'un modèle électrique sans dérivation correspondant à une première condition de fonctionnement, dite condition sans dérivation ; une étape (E4) d'optimisation des paramètres du modèle électrique sans dérivation à partir d'un caractéristique de référence I($V_{ref}$) égale à I(V) ; une étape (E5) de détermination des paramètres du modèle électrique correspondant à une deuxième condition de fonctionnement, dite condition avec dérivation, afin d'obtenir un modèle électrique avec dérivation à partir de la caractéristique I(V) ; une étape (E6) de détermination, à partir de la caractéristique I(V), du meilleur modèle parmi le modèle sans dérivation et le modèle avec dérivation.

100

FIG. 1

EP 3 654 527 A1

**Description**

**DOMAINE TECHNIQUE DE L'INVENTION**

Le domaine technique de l'invention est celui du diagnostic des chaines de modules photovoltaïques. La présente invention concerne un procédé de détermination d'un modèle d'une chaine de modules photovoltaïques et en particulier un procédé qui prend en compte l'effet de dérivation. La présente invention concerne également un procédé de détection d'une anomalie dans une chaine de modules photovoltaïques.

**ARRIERE-PLAN TECHNOLOGIQUE DE L'INVENTION**

Il est connu de diagnostiquer le bon fonctionnement d'un module photovoltaïque en considérant sa courbe I(V) (mesure du courant en fonction de la tension appliquée). Ce diagnostic est le plus souvent effectué à partir de mesures de « flash-test », c'est-à-dire de mesure I(V) en condition standard. Cependant, lorsque l'on cherche à diagnostiquer des modules sur site, l'analyse ne concerne plus nécessairement des modules unitaires mais bien souvent des chaines de plusieurs modules. De plus, on peut se trouver confronté à des types de défauts beaucoup plus variés tels que la présence d'ombrage par exemple. Plus particulièrement, il arrive que la courbe I(V) d'un module ou d'une chaine de module présente une inflexion. Cette inflexion se produit quand une partie de la chaine fonctionne dans un mode moins favorable. Dans ce cas, des diodes de dérivation (ou diodes de « by-pass ») introduite dans les modules à cet effet, rend la partie de la chaine « défaillante » indépendante du reste du système pour éviter qu'il soit impacté en totalité. Un tel évènement se produit par exemple en cas d'ombrage partiel de la chaine, dans le cas de salissure non homogène sur la chaine, en cas de défaut localisé (comme un *hotspot*), etc. Dans la présente description, l'ensemble de ces cas sont regroupés sous le terme de « avec dérivation ».

L'effet d'une dérivation sur la courbe I(V) d'une chaine de module et sur le modèle électrique équivalent à une diode (noté « modèle équivalent » dans la suite) qui la modélise est bien connu et documenté dans Batzelis, E. I., Georgilakis, P. S., & Papathanassiou, S. A. (2014) ; Energy models for photovoltaic systems under partial shading conditions: a comprehensive review. IET Renewable Power Génération, 9(4), 340-349. En revanche, aucune méthode ne permet d'estimer les paramètres d'un modèle de la courbe I(V) intégrant une possible dérivation à partir d'un ensemble de mesures et d'effectuer un diagnostic à partir de cette estimation.

Dans Batzelis, E., & Papathanassiou, S. A. (2016). An Algorithm to Detect Partial Shading Conditions in a PV System ; In Materials Science Forum (Vol. 856, pp. 303-308), il est proposé une méthode permettant de détecter la présence d'une dérivation mais cette dernière ne permet pas de réaliser un diagnostic de la chaine de modules mesurée. Dans Jordehi, A. R. (2016). Parameter estimation of solar photovoltaic (PV) cells: a review ; Renewable and Sustainable Energy Reviews, 61, 354-371, une méthode s'appuyant sur des modèles équivalents pour le diagnostic de chaines (supposées non-dérivées) est proposée. Cependant, il n'existe aucune solution permettant d'effectuer les deux taches : à savoir la détermination d'un modèle équivalent y compris en présence d'une dérivation. Notons que l'utilisation séquentielle des deux méthodes évoquées précédemment n'est pas satisfaisante car elle ne permet pas de fournir d'information sur les paramètres du modèle équivalent (et donc de diagnostic autre que « présence d'une dérivation ») en cas d'ombrage partiel par exemple.

Dans El Basri, Y., Bressan, M., Seguier, L., Alawadhi, H., & Alonso, C. (2015). A proposed graphical electrical signatures supervision method to study PV module failures ; Solar Energy, 116, il est proposé une méthode dans laquelle la dérivée et la dérivée seconde de la courbe I(V) sont considérées. L'analyse de ces deux courbes est utilisée pour proposer un diagnostic distinguant en particulier les cas de bon fonctionnement des cas où il y a présence d'une dérivation (cas d'ombrage en particulier) et des cas d'augmentation significative de la résistance-série. Il est cependant utile de noter qu'aucune estimation de paramètres du modèle équivalent n'est proposée (à plus forte raison en présence d'une dérivation) et que la méthode proposée dans ce document est très sensible au bruit de mesure (notamment du fait de l'utilisation de la dérivée première et seconde du signal).

Il existe donc un besoin d'une méthode de diagnostic robuste au bruit de mesure et rapide de mise en œuvre, autorisant ainsi une utilisation sur site. Il existe également un besoin d'une méthode de diagnostic qui ne fait pas d'hypothèse sur les conditions environnementales et tient compte de la possible présence d'une dérivation.

**RESUME DE L'INVENTION**

L'invention offre une solution aux problèmes évoqués précédemment, en proposant une méthode de diagnostic robuste au bruit de mesure (et donc adaptée à une mise en œuvre sur site) et rapide de mise en œuvre.

Dans la suite, on note « I » un ensemble de mesures de courant (en Ampère) et « V » un ensemble de mesures de tension (en Volt). I(V) décrit alors un ensemble de point dans un espace dont l'axe des abscisses correspond à la tension et l'axe des ordonnées correspond au courant. On notera « Y(W) » la courbe paramétrique dans le même espace qui associe une valeur de courant *Y* en fonction d'une valeur de tension *W*.

Pour cela, un premier aspect de l'invention concerne un procédé de détermination d'un modèle électrique d'une chaine de modules photovoltaïques à partir d'une caractéristique I(V) de ladite chaine caractérisé en ce que le procédé comprend :

- une étape de détection d'une première zone linéaire et d'une deuxième zone linéaire de la caractéristique I(V) ;
- une étape d'initialisation des paramètres d'un modèle électrique sans dérivation correspondant à une première condition de fonctionnement, dite condition sans dérivation à partir de la caractéristique *I(V)* ;
- une étape d'optimisation des paramètres du modèle électrique sans dérivation à partir d'une caractéristique de référence *I(V_{ref})* égale à I(V) ;
- une étape de détermination des paramètres du modèle électrique correspondant à une deuxième condition de fonctionnement, dite condition avec dérivation, afin d'obtenir un modèle électrique avec dérivation à partir de la caractéristique I(V) ;
- une étape de détermination, à partir de la caractéristique I(V), du meilleur modèle parmi le modèle sans dérivation et le modèle avec dérivation.

Grâce à l'invention, il est possible d'obtenir un modèle électrique équivalent tout en restant économe en hypothèses et en nombre de paramètres (par exemple aucune mesure de l'environnement de la chaine, comme l'irradiance ou la température, n'est nécessaire). On obtient ainsi un procédé qui fonctionne y compris dans des conditions environnementales éloignées des conditions standards. De plus, le faible temps de calcul associé au procédé selon un premier aspect de l'invention le rend compatible avec un objectif de diagnostic sur site (la durée du procédé est typiquement de l'ordre d'un dixième de seconde sur un ordinateur de bureau).

Outre les caractéristiques qui viennent d'être évoquées dans le paragraphe précédent, le procédé selon un premier aspect de l'invention peut présenter une ou plusieurs caractéristiques complémentaires parmi les suivantes, considérées individuellement ou selon toutes les combinaisons techniquement possibles.

Dans un mode de réalisation, le modèle sans dérivation prend la forme suivante :

$$Y = I_{ph} - \frac{W_{th} + R_s \times Y}{R_p} - I_0 \times \left( e^{\frac{W_{th} + R_s \times Y}{N}} - 1 \right)$$

avec Y le courant fournit par la chaine, $I_{ph}$ le photo-courant, $W_{th}$ la tension aux bornes de la chaine sous l'hypothèse d'absence de dérivation, $R_s$ la résistance en série, $R_p$ la résistance en parallèle, $I_0$ le courant d'obscurité de la diode et

$$N = N_s \times n \times \frac{k_b}{q} \times T_c$$

N un paramètre défini par où $N_s$ est le nombre de cellules en série dans la chaine, n est le coefficient d'idéalité de la diode, $k_b$ est la constante de Boltzmann, q est la charge élémentaire d'un proton et $T_c$ est la température des cellules des modules de la chaine.

Dans un mode de réalisation, le procédé selon un premier aspect de l'invention comprend, avant l'étape de détection des zones linéaires de la caractéristique I(V), une étape de vérifications des données de la caractéristique I(V).

Cette étape permet d'améliorer la précision dans la détermination du modèle électrique en supprimant les parties non utiles de la caractéristique I(V) telle que mesurée.

Dans un mode de réalisation l'étape de vérifications des données de la caractéristique I(V) comprend au moins l'une des deux sous-étapes suivantes :

- une sous-étape de détection de la période de commutation de la chaine ;
- une sous-étape de suppression des données aberrantes.

La caractéristique I(V) est ainsi débarrassée des données aberrantes et/ou des données correspondant à des mesures effectuées avant la commutation de la chaine que l'on souhaite diagnostiquer. Pour rappel, l'ensemble de mesures *I(V)* nécessaire à la mise en œuvre du procédé est obtenu en passant progressivement d'un fonctionnement où la chaine de modules est mise en court-circuit, à un fonctionnement où la chaine est mise en circuit ouvert (ou inversement). On entend par période de commutation, la période qui est entre ces deux évènements extrêmes, c'est-à-dire la période pendant laquelle les mesures *I(V)* sont effectuées.

Dans un mode de réalisation, l'étape de détection d'une première zone linéaire et d'une deuxième zone linéaire de la caractéristique I(V) comprend :

- une sous-étape de détermination du point de puissance maximum ($I_{MPP}$, $V_{MPP}$), les points de la caractéristique I(V) situés au-dessus de la droite passant par l'origine (0,0) et le point ($I_{MPP}$, $V_{MPP}$) étant considérés comme candidats à la zone linéaire proche de $I_{sc}$, dite première zone linéaire, et les points situés au-dessous de la cette droite étant considérés comme candidats à la zone linéaire proche de $V_{oc}$, dite deuxième zone linéaire ;
- une sous-étape de détermination du modèle linéaire de Y en fonction de W tel que $Y = a_{sc} \times W + b_{sc}$ à partir des points candidats à la première zone linéaire et du modèle linéaire de W en fonction de Y tel que $W = a_{oc} \times Y + b_{oc}$ à partir des points candidats à la deuxième zone linéaire, de sorte à déterminer les paramètres $a_{sc}$, $b_{sc}$, $a_{oc}$ et $b_{oc}$.

Dans un mode de réalisation, lors de l'étape E3 d'initialisation des paramètres du modèle électrique sans dérivation, les paramètres du modèle électrique sans dérivation $I_{ph}$, $R_s$, $R_p$, $I_0$ et N sont initialisé de la manière suivante :

- $R_p$ est donné par 
$$R_p = -\frac{1}{a_{sc}} \; ;$$

- N est donné par 
$$N = \frac{k}{q} \times N_s \times T_{init}$$ 
avec $T_{init} \in [200,300]$, de préférence $T_{init} \in [230,240]$, voire $T_{init} = 233.15$ ;

- $I_0$ est donné par 
$$I_0 = \frac{R_p \times b_{sc} - b_{oc}}{R_p \left( e^{\frac{b_{oc}}{N}} - 1 \right)} \; ;$$

- $R_s$ est donné par 
$$R_s = -a_{oc} - \frac{N \times R_p}{N + I_0 \times R_p \times e^{\frac{b_{oc}}{N}}} \; ;$$ 
et

- $I_{ph}$ est donné par 
$$I_{ph} = \frac{R_p + R_s}{R_p} \times b_{sc} + I_0 \times \left( e^{\frac{R_s \times b_{sc}}{N}} - 1 \right) \; ;$$

avec $I_{ph}$ le photo-courant, $R_s$ la résistance en série, $R_p$ la résistance en parallèle, $I_0$ le courant d'obscurité de la diode, $N_s$ le nombre de cellules en série dans la chaine, $k_b$ est la constante de Boltzmann et q est la charge élémentaire d'un proton.

Dans un mode de réalisation, l'étape d'optimisation des paramètres du modèle électrique sans dérivation comprend :

- une première sous-étape d'optimisation des paramètres de la composante linéaire du modèle électrique sans dérivation ;
- une deuxième sous-étape de d'optimisation des paramètres de la composante exponentielle du modèle électrique sans dérivation ;

lesdites première et deuxième sous-étapes étant itérées une pluralité de fois de sorte à obtenir un modèle sans dérivation.

Ainsi l'optimisation des paramètres du modèle sans dérivation peut s'effectuer en deux sous-étapes ce qui rend ladite optimisation moins gourmande en temps de calcul. Il est ainsi possible d'obtenir des estimations séparées des paramètres de la composante linéaire et de la composante exponentielle. Ces deux sous-étapes sont réitérées de sorte à améliorer la précision des paramètres du modèle. Ainsi, au cours des itérations, on obtient une compensation croisée des composantes linéaire et exponentielle permettant de simplifier l'estimation de l'une ou de l'autre.

Dans un mode de réalisation, la sous-étape d'optimisation des paramètres de la composante linéaire du modèle sans dérivation comprend :

- une phase de détermination d'une caractéristique I(V) linéaire de sorte à obtenir $I_{lineaire}(V)$ ;
- une phase de détermination de la régression linéaire de l'équation $Y = a_{sc} \times W + b_{sc}$ à partir de la courbe $I_{lineaire}(V)$ ;
- une phase de détermination des paramètres de la composante linéaire du modèle sans dérivation à partir de ladite régression.

Dans un mode de réalisation, la sous-étape d'optimisation des paramètres de la composante exponentielle du modèle comprend :

- une phase de détermination d'une caractéristique V(I) linéaire de sorte à obtenir $V_{lineaire}(I)$ ;
- une phase de détermination de la régression linéaire de l'équation $W = a_{oc} \times Y + b_{oc}$ à partir de la courbe $V_{lineaire}(I)$ ;
- une phase de détermination des paramètres de la composante exponentielle du modèle sans dérivation à partir de ladite régression.

Dans un mode de réalisation, l'étape de détermination des paramètres du modèle électrique avec dérivation comprend :

- une première sous-étape d'initialisation d'un premier paramètre $P_d$ et d'un deuxième paramètre $P_l$ caractéristiques de la dérivation ;
- une deuxième sous-étape de détermination, à partir des paramètres $P_d$ et $P_l$, de la caractéristique $W_{mod}(Y)$ associée au modèle avec dérivation ;
- une troisième sous-étape d'optimisation des paramètres $P_d$ et $P_l$ du modèle avec dérivation $W_{mod}(Y)$ à partir de la caractéristique $I(V)$ ;
- une quatrième sous-étape de déformation, à partir des paramètres $P_d$ et $P_l$, de la courbe I(V) de sorte à obtenir une caractéristique $I(V_{unshaded})$ sans dérivation ;
- une cinquième sous-étape d'optimisation des paramètres du modèle électrique sans dérivation à partir d'une caractéristique de référence $I(V_{ref})$ égale à $I(V_{unshaded})$.

Un deuxième aspect de l'invention concerne un procédé de détection d'une anomalie dans une chaine de modules photovoltaïques comprenant :

- une étape de détermination du modèle électrique de la chaine de modules à l'aide d'un procédé selon un premier aspect de l'invention ;
- une étape de détection d'une anomalie en fonction de la valeur d'au moins un paramètre du modèle électrique déterminé.

Un troisième aspect de l'invention concerne un dispositif de traitement de données comprenant des moyens de mettre en œuvre le procédé selon un premier aspect ou un deuxième aspect de l'invention.

Un quatrième aspect de l'invention concerne un programme d'ordinateur comprenant des instructions qui, lorsque le programme est exécuté par un ordinateur, conduisent celui-ci à mettre en œuvre le procédé selon un premier aspect ou un deuxième aspect de l'invention.

Un cinquième aspect de l'invention concerne un support de données lisible par ordinateur, sur lequel est enregistré le programme d'ordinateur selon un quatrième aspect de l'invention.

L'invention et ses différentes applications seront mieux comprises à la lecture de la description qui suit et à l'examen des figures qui l'accompagnent.

## BREVE DESCRIPTION DES FIGURES

Les figures sont présentées à titre indicatif et nullement limitatif de l'invention.

- La figure 1 montre un ordinogramme d'un mode de réalisation d'un procédé selon un premier aspect de l'invention.
- La figure 2 montre une représentation schématique d'une chaine de modules pouvant être soumise à un procédé selon un premier ou deuxième aspect de l'invention.
- La figure 3 montre un schéma électrique d'un modèle équivalent d'une chaine de modules.
- La figure 4 montre un ordinogramme d'une étape d'un mode de réalisation d'un procédé selon un premier aspect de l'invention.
- La figure 5 montre une représentation de la caractéristique I(V) (à gauche), de la tension V en fonction du temps (au centre) et du courant I en fonction du temps (à droite).
- La figure 6 montre une représentation de la caractéristique I(V) sans dérivation (à gauche) et avec dérivation (à droite) ainsi que les zones hors desquelles les données sont considérées comme aberrantes.
- La figure 7 montre un ordinogramme d'une étape d'un mode de réalisation d'un procédé selon un premier aspect de l'invention.
- La figure 8 montre une représentation schématique d'une détermination des zones de linéarité de la caractéristique I(V) sans dérivation (à gauche) et avec dérivation (à droite).
- La figure 9 montre un ordinogramme d'une étape d'un mode de réalisation d'un procédé selon un premier aspect de l'invention.
- La figure 10 montre une représentation schématique d'une compensation de la composante exponentielle de la caractéristique I(V) sans dérivation (à gauche) et avec dérivation (à droite).
- La figure 11 montre une représentation schématique d'une détermination des paramètres de la composante exponentielle dans le cas d'une caractéristique Y(W) sans dérivation (à gauche) et avec dérivation (à droite).

- La figure 12 montre un ordinogramme d'une étape d'un mode de réalisation d'un procédé selon un premier aspect de l'invention.
- La figure 13 montre une représentation schématique d'une détermination des paramètres de l'effet de dérivation.
- La figure 14 montre une représentation schématique d'une compensation de l'inflexion de la caractéristique I(V).

## DESCRIPTION DETAILLEE D'AU MOINS UN MODE DE REALISATION DE L'INVENTION

Sauf précision contraire, un même élément apparaissant sur des figures différentes présente une référence unique.

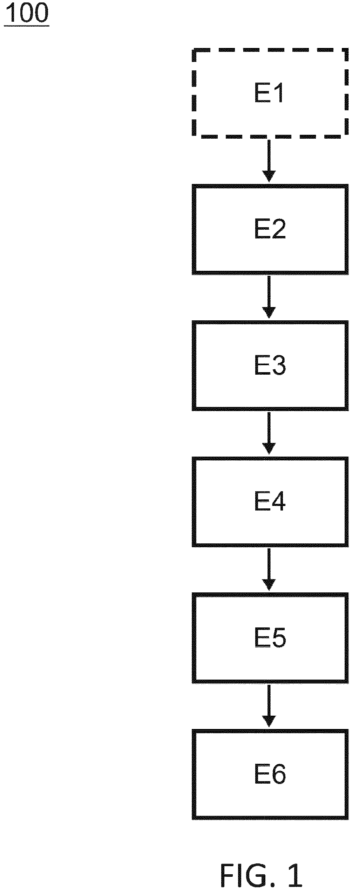

Un mode de réalisation d'un premier aspect de l'invention illustré à la figure 1 concerne un procédé 100 de détermination d'un modèle électrique d'une chaine de modules photovoltaïques à partir d'une caractéristique I(V). Cette caractéristique I(V) pourra être mesurée lors de tests en fin de ligne de production mais également au cours du fonctionnement de la chaine de modules sur site. A cette fin, dans un mode de réalisation, le procédé 100 selon un premier aspect de l'invention comprend une étape d'acquisition d'une caractéristique I(V). Dans la suite, les expressions caractéristique I(V) et courbe I(V) pourront être utilisées indifféremment. De plus $V_i$ (respectivement $I_i$) désignera la valeur de V (respectivement I) pour le i-ème point de la courbe (ou la i-ème mesure, chaque point correspondant à une mesure). De plus, sauf précision contraire, les unités utilisées sont les unités du système international (U.S.I.).

Définition du modèle électrique

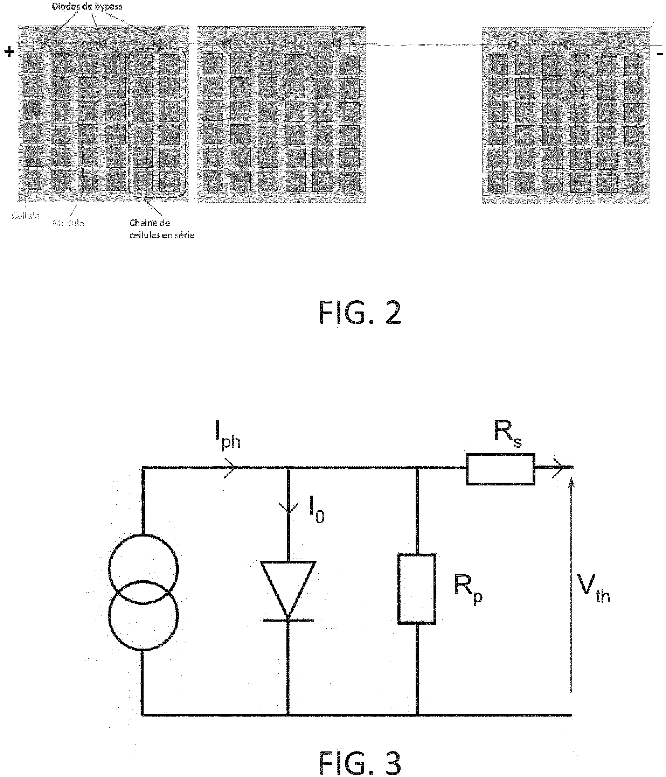

Une chaine de modules photovoltaïques telle que celle illustrée à la figure 2 est souvent décrite par un modèle électrique équivalent à « une diode ». Ce modèle peut indifféremment être utilisé pour décrire une cellule, un module ou une chaine de modules (à un coefficient prêt) et permet de faire le lien entre la tension V et le courant I généré par la chaine qu'il modélise. Il peut être représenté sous la forme d'un circuit équivalent tel que celui illustré à la figure 3. Un modèle à une diode présente l'avantage d'être parmi les plus simples et les plus économes en paramètres. Cependant, à l'inverse des modèles à deux diodes, il ne modélise pas l'hétérogénéité du semi-conducteur et est moins performant à faible éclairement. Le procédé selon l'invention sera dans la suite illustré à l'aide d'un modèle à « une diode » mais il peut être utilisé avec tout type de modèle. Il est cependant préférable que le modèle présente une composante linéaire et une composante exponentielle.

Le modèle à une diode illustré à la figure 3 peut être écrit sous la forme suivante :

$$Y = I_{ph} - \frac{W_{th} + R_s \times Y}{R_p} - I_0 \times \left( e^{\frac{W_{th} + R_s \times Y}{N}} - 1 \right)$$

avec Y le courant fournit par la chaine, $I_{ph}$ le photo-courant, $W_{th}$ est la tension aux bornes de la chaine sous l'hypothèse d'absence de dérivation, $R_s$ est la résistance en série, $R_p$ est la résistance en parallèle, $I_0$ est le courant d'obscurité de la diode et N est un paramètre défini par $N = N_s \times n \times \frac{k_b}{q} \times T_c$ avec $N_s$ le nombre de cellules en série dans la chaine, n le coefficient d'idéalité de la diode, $k_b$ la constante de Boltzmann, q est la charge élémentaire d'un proton et $T_c$ est la température des cellules des modules de la chaine. On remarquera que le modèle peut être reformulé de la manière suivante :

$$W_{th} = R_p \times I_{ph} + \left( R_s + R_p \right) \times Y - R_p \times I_0 \times \left( e^{\frac{W_{th} + R_s \times Y}{N}} - 1 \right)$$

A partir de ce modèle, il est donc possible d'obtenir Y en fonction de $W_{th}$ ou $W_{th}$ en fonction de Y, par exemple par des méthodes de calcul itératif ou en utilisant la fonction W de Lambert.

On notera que N dépend de deux paramètres inconnus initialement: n et $T_c$. Cependant, en première approximation, il est possible de choisir n comme étant égale à 1.25 qui est une valeur moyenne admise pour des modules photovoltaïques neufs. De plus, la température $T_c$ peut être calculée à l'aide de la formule suivante :

$$T_c = \frac{\frac{(V_{oc} - V_{oc}^{STC})}{\beta_{V_{oc}} \times \frac{V_{oc}^{STC}}{100}} + T_{STC}}{1 + N_s \times n \times \frac{k}{q} \times \log\left(\frac{I_{sc}}{I_{sc}^{STC}}\right)}$$

avec $V_{oc}$ la tension en circuit ouvert, $V_{oc}^{STC}$ la tension en circuit ouvert au condition STC (standard test conditions), $\beta_{V_{oc}}$ le coefficient de perte de tension avec l'augmentation de la température de la cellule (le plus souvent ce coefficient est négatif), $T_{STC}$ la température aux conditions STC (et vaut 298.15 K soit environ 25 °C), $I_{sc}$ le courant de court-circuit et $I_{sc}^{STC}$ le courant de court-circuit aux conditions STC. Il convient de noter la tension aux bornes de la cellule en circuit ouvert aux conditions STC $V_{oc}^{STC}$, le coefficient de perte de tension avec l'augmentation de la température de la cellule $\beta_{V_{oc}}$ et le courant de court-circuit aux conditions STC $I_{sc}^{STC}$ sont le plus souvent fournis par le constructeur de la cellule ou du module et ne sont donc pas à déterminer. Les valeurs de $I_{sc}$ et $V_{oc}$ peuvent quant à elles être déterminées à partir de la courbe $Y(W)$. En effet, la valeur de $I_{sc}$ est donnée par l'intersection de la courbe $Y(W)$ et de l'axe des ordonnées tandis que la valeur de $V_{oc}$ est donné par l'intersection de la courbe $Y(W)$ et de l'axe des abscisses.

Le modèle qui vient d'être présenté ne prend pas en compte l'effet de dérivation et sera donc appelé dans la suite « modèle sans dérivation ».

Valeurs limites des paramètres du modèle électrique

Lors de la mise en œuvre du procédé selon un premier aspect de l'invention, il sera parfois nécessaire de vérifier que certains paramètres (soit des paramètres du modèle soit des paramètres intermédiaires nécessaires aux calculs) ne dépassent pas certaines valeurs limites. Pour plus de clarté, l'ensemble de ces limites sera détaillé ici. Il s'agit bien entendu d'un exemple possible de limites à imposer lors de la mise en œuvre d'un procédé selon l'invention. Il va de soi que d'autres limites peuvent être envisagées.

Le paramètre $P_d$ qui représente la proportion de diodes de « by-pass » potentiellement « by-passées » est limité de la manière suivante :

$$P_d^{min} = \max\left(\frac{V_{max-1}}{V_{max}}, \frac{N_d}{4}, 0.01\right)$$

et

$$P_d^{max} = 1 - \max\left(\frac{V_{min+1}}{V_{max}}, \frac{N_d}{4}, 0.01\right)$$

avec $V_{min}$ la plus petite valeur de V, $V_{min+1}$ la deuxième plus petite valeur de V, $V_{max-1}$ la deuxième plus grande valeur de V et $V_{max}$ la plus grande valeur de V.

Le paramètre $P_l$ qui représente la perte de courant en court-circuit induit sur la sous-chaine si elle était isolée par rapport à ce qu'il est dans la sous-chaine non-touchée est limité de la manière suivante :

$$P_I^{min} = 0.025 \text{ et } P_I^{max} = 0.975$$

Le paramètre $I_{sc}$ qui représente le courant de court-circuit est limité de la manière suivante :

$$I_{sc}^{min} = max\left(\frac{I_{sc}^{STC}}{1000}, 0.9 \times median(I)\right)$$

et

$$I_{sc}^{max} = min(1.5 \times I_{sc}^{STC}, 1.1 \times max(I))$$

avec median(x) représente la valeur médiane de la variable x.

Le paramètre $V_{oc}$ qui représente la tension en circuit ouvert est limité de la manière suivante :

• si LOGI < 0

$$V_{oc}^{min} = V_{oc}^{STC} \times max\left(1 + \frac{\beta_{V_{oc}}}{100} \times \left(\left(1 + LOGI \times \frac{k_b}{q} \times N_s\right) \times 373.15\right), 0.01\right)$$

et

$$V_{oc}^{max} = V_{oc}^{STC} \times min\left(1 + \frac{\beta_{V_{oc}}}{100} \times \left(\left(1 + LOGI \times \frac{k_b}{q} \times N_s\right) \times 233.15\right), 2\right)$$

• sinon

$$V_{oc}^{min} = V_{oc}^{STC} \times max\left(1 + \frac{\beta_{V_{oc}}}{100} \times \left(\left(1 + 3 \times LOGI \times \frac{k_b}{q} \times N_s\right) \times 373.15 - T_{STC}\right), 0.01\right)$$

et

$$V_{oc}^{max} = V_{oc}^{STC} \times min\left(1 + \frac{\beta_{V_{oc}}}{100} \times \left(\left(1 + 3 \times LOGI \times \frac{k_b}{q} \times N_s\right) \times 373.15 - T_{STC}\right), 2\right)$$

avec, lorsque la valeur de $I_{sc}$ a déjà été estimée, $LOGI = log\left(\frac{I_{sc}}{I_{sc}^{STC}}\right)$ ; sinon LOGI = $log\left(\frac{I_{sc}^{max}}{I_{sc}^{STC}}\right)$.

Le paramètre $R_p$ qui désigne la résistance en parallèle est limité de la manière suivante :

$$R_p^{min} = 1.05 \times max\left(a_1^{diag}, a_2^{diag}\right)$$

et

$$R_p^{max} = 100 \times max\left(a_1^{diag}, a_2^{diag}\right)$$

où $a_1^{diag} = \frac{V_{max} - V(I_{max})}{I_{max} - I(V_{max})}$ si $\frac{V_{max} - V(I_{max})}{I_{max} - I(V_{max})}$ est défini et $a_1^{diag} = \frac{V_{max}}{I_{max}}$ sinon, $V_{max}$ étant la valeur maximale de V, $I_{max}$ étant la valeur maximale de I, $V(I_{max})$ est la valeur de V pour le point de la courbe I(V) où I est maximum et $I(V_{max})$ est la valeur de I pour le point de la courbe I(V) où V est maximum.

Le paramètre $R_s$ qui représente la résistance série est limité de la manière suivante :

$$R_s^{min} = 0.01 \times \max\left(a_1^{diag}, a_2^{diag}\right)$$

et

$$R_s^{max} = 0.95 \times \max\left(a_1^{diag}, a_2^{diag}\right)$$

Le paramètre $I_0$ qui représente le courant d'obscurité de la diode du modèle équivalent est limité de la manière suivante :

$$I_0^{min} = 10^{-30} \times \max(I_{sc}^{STC}, 1)$$

et

$$I_0^{max} = 10^{-3} \times \min(I_{sc}^{STC}, 1)$$

Le paramètre N détaillé auparavant est limité de la manière suivante :

$$N^{min} = \min\left(\max\left(N_s \times \frac{k}{q} \times 233.15, \frac{b_{oc}}{50}\right), 1000 \times b_{oc}\right)$$

et

$$N^{max} = \min\left(\max\left(3 \times N_s \times \frac{k}{q} \times 273.15, \frac{b_{oc}}{50}\right), 1000 \times b_{oc}\right).$$

où le paramètre $b_{oc}$ est un paramètre qui sera défini dans la suite de la description. La limitation concernant N garantit que $T_c$ reste compris entre -40 °C et 100 °C et que n reste compris entre 1 et 3. Elle garantit également que N est compris entre 2% et 100 000% de $b_{sc}$ (paramètre qui sera défini dans la suite) afin de s'assurer que la valeur exp $\left(\frac{W + R_s \times Y}{N}\right)$ reste dans le domaine calculable.

Lorsque, lors de la vérification d'un paramètre, ce dernier dépasse une des limites qui lui est fixée, alors la valeur dudit paramètre est choisie comme étant égale à la limite dépassée.

Comparaison entre un modèle électrique et des mesures

Dans un procédé de détermination d'un modèle, il est important de comparer les modèles possibles avec des mesures, c'est-à-dire quantifier l'adéquation entre un modèle et un ensemble de mesures $V_{ref}(I)$ où $V_{ref}$ sont des données de référence. Ces données peuvent provenir directement de la mesure ou bien alors être obtenues après déformation des données initiales, par exemple pour compenser un phénomène de dérivation (cet aspect sera détaillé dans la suite).

Plusieurs solutions sont envisageables pour quantifier une telle adéquation. Une méthode connue est l'utilisation d'une erreur quadratique moyenne normalisée (ou NRMSE : normalized root mean square error). Cette métrique possède cependant des inconvénients dans le présent cas, et notamment celui de donner plus d'importance à la partie exponentielle.

Dans un mode de réalisation, la fonction S(W,V) avec W le modèle à évaluer et V les mesures (modifiées ou non) est définie comme suit :

$$S(W,V) = \int_0^{I_{sc}} |W(Y) - V(Y)| \times dY$$

En pratique, la fonction S est calculée en assimilant la courbe de mesures de V en fonction de I à son interpolation linéaire comme suit :

$$S(W,V) = \sum_{i=1}^{cardinal(I)-1} \frac{|W(I_i) - V(I_i)| + |W(I_{i+1}) - V(I_{i+1})|}{2} \times (I_{i+1} - I_i)$$

où $\{I_1, I_2, ..., I_{cardinal(I)}\}$ décrit la liste des valeurs du vecteur I ordonnées dans l'ordre croissant. Le calcul de la fonction S est ainsi exécutable rapidement bien qu'il néglige les cas où les courbes $W$ et $V$ se croisent. De plus, S constitue une mesure de la qualité de l'ajustement (*fit* en anglais) entre le modèle W et la mesure V, cette fonction étant nulle si le modèle $W$ s'ajuste parfaitement avec les mesures $V$, et croissante avec l'écart entre le modèle $W$ et les mesures $V$.

Cette fonction d'évaluation des coûts originale évite des défauts de convergences ou des problèmes de séparabilité des métriques d'évaluation classiques et offre une solution directe pour l'estimation de paramètres très corrélés (comme $I_0$ et N en particulier).

Vérification des données

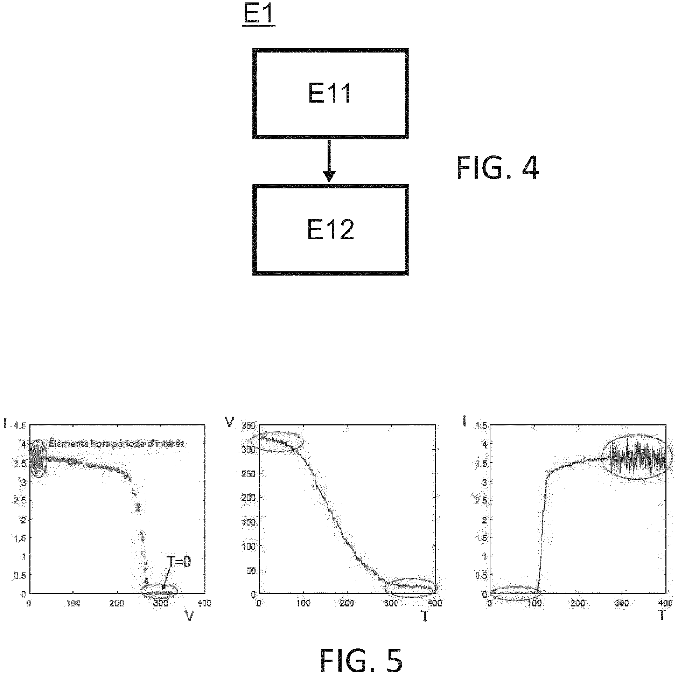

Le procédé selon l'invention se propose, à partir d'une mesure de la caractéristique I(V) d'une chaine de modules, de déterminer les paramètres du modèle électrique équivalent de la chaine. Cependant, il arrive souvent que la mesure de la caractéristique I(V) ne soit pas à prendre en compte entièrement et/ou comporte des données aberrantes. Afin de ne retenir que la partie utile de la caractéristique I(V), dans un mode de réalisation illustré aux figures 4 à 6, le procédé comprend une étape E1 de vérifications des données de la caractéristique I(V).

Par exemple, comme illustré à la figure 5, l'enregistrement de la caractéristique I(V) peut être démarré avant la commutation de la chaine et arrêté après la commutation de cette dernière. La figure 5 représente à gauche la caractéristique I(V), au milieu la tension V en fonction du temps et à droite le courant I en fonction du temps. Dans le cas illustré à la figure 5, un bruit non négligeable est présent en début et en fin de signal (zones entourées sur la figure 5), ce qui peut réduire la précision dans la détermination des paramètres du modèle. Afin d'éliminer les parties de la caractéristique I(V) ne correspondant pas à une période durant laquelle la chaine de modules est commutée, dans un mode de réalisation, l'étape E1 de vérifications des données de la caractéristique I(V) comprend une sous-étape E11 de détection de la période de commutation. Une manière d'opérer cette détection est de tenir compte du fait que, lorsque la chaine est commutée, la courbe I(V) est toujours croissante et la courbe V(I) est toujours décroissante. Si l'on considère la courbe V(I) (mais la même chose peut être faite avec une courbe I(V)), il est possible de calculer la dérivée sur toute la période de mesure. Hors de la période d'intérêt, les variations mesurées sont d'une part dues aux modifications des conditions environnementales (supposées aléatoires avec une loi de probabilité symétrique) et d'autre part dues à un bruit de mesure (également supposé aléatoire, de loi symétrique et indépendante). Aussi, sur une fenêtre glissante, le nombre de signes positifs de la dérivée du signal doit donc suivre une loi binomiale de paramètre L et ½ où L est la largeur de la fenêtre. Au contraire, dans les périodes d'intérêt (c'est-à-dire lorsque la chaine est commutée), la plupart des signes devrait être négatif (ou positif si l'on s'intéresse à la caractéristique I(V)). On peut donc quantifier pour chaque fenêtre glissante la probabilité d'obtenir par hasard le ratio $\frac{signe\ positif}{signe\ négatif}$ observé et déduire de ce ratio si la fenêtre glissante se rapporte à une période de commutation de la chaine ou non. Par exemple, la période de commutation est considérée commencée lorsque la fenêtre glissante donne une probabilité inférieure à une limite choisie (par exemple 5%) que la répartition des signes suive une loi binomiale. De même, la période de fonctionnement est considérée terminée lorsque la condition précédente n'est plus remplie. Il est ainsi possible de déterminer la période durant laquelle la chaine de modules est commutée.

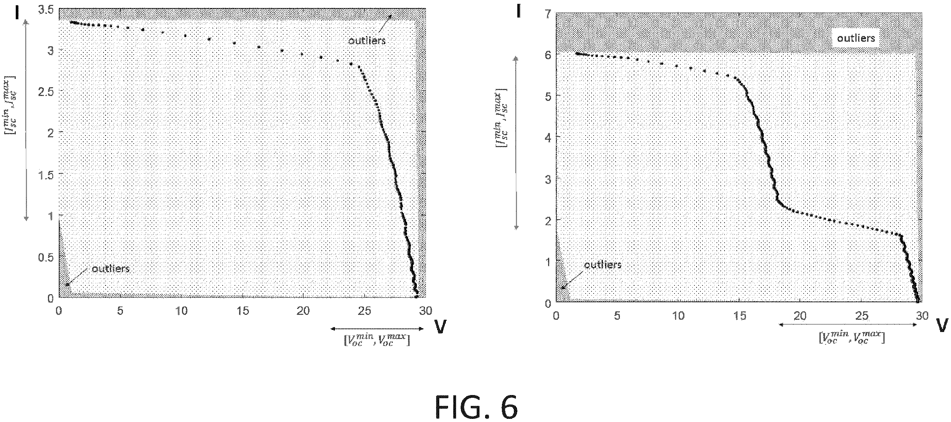

La caractéristique I(V) peut également comprendre des données aberrantes (*outliers* en anglais), c'est-à-dire qui ne sont pas représentatives de la chaine de modules dont on cherche précisément à déterminer le modèle. Il peut donc être avantageux de les supprimer. Pour cela, dans un mode de réalisation illustré à la figure 6, l'étape E1 de vérifications des données de la caractéristique I(V) comprend une sous-étape E12 de suppression des données aberrantes. Dans un mode de réalisation, les points correspondant à un courant supérieur à $I_{sc}^{max}$ ou à une tension supérieure à $V_{oc}^{max}$ sont supprimés. Dans un mode de réalisation également illustré en figure 6, les points situés au-dessus d'une courbe Y(W) basée sur les valeurs extrêmes des différents paramètres du modèle équivalent sont supprimés. Autrement dit, le courant Y(W) est calculé en prenant $I_{ph} = I_{sc}^{max}, \; R_s = R_s^{min}, \; R_p = R_p^{max}, \; N = N^{min}$ ainsi que :

$$I_0 = \frac{I_{sc}^{max} - \dfrac{V_{oc}^{max}}{R_p^{max}}}{\exp\left(\dfrac{V_{oc}^{max}}{N_s \times \dfrac{k}{q} \times 233.15}\right) - 1}$$

On vérifiera bien entendu que $I_0$ reste dans les limites imposées (ex. on contrôlera que la valeur maximale de la tension de la courbe limite reste en dessous de $V_{oc}^{max}$). De même, les valeurs de V ne devraient jamais se trouver sous la courbe suivante :

$$W = V_{oc}^{min} \times \left(1 - \frac{Y}{I_{sc}^{min}}\right) \times (1 - P_d^{min})$$

Aussi, dans un mode de réalisation, les points situés sous cette courbe sont également supprimés. En outre, les valeurs de I ne devraient jamais se trouver sous la courbe suivante :

$$Y = I_{sc}^{min} \times \left(1 - \frac{W}{V_{oc}^{min}}\right) \times \left(1 - P_I^{min}\right)$$

Ainsi, dans un mode de réalisation, les points situés sous cette courbe sont également supprimés.

L'étape E1 de vérifications des données qui vient d'être décrite n'est pas obligatoire mais peut dans certains cas conduire à une amélioration sensible de la précision dans la détermination des paramètres du modèle électrique.

Détection des zones linéaires et initialisation des paramètres du modèle électrique sans dérivation

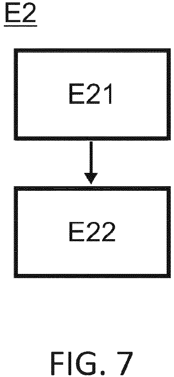

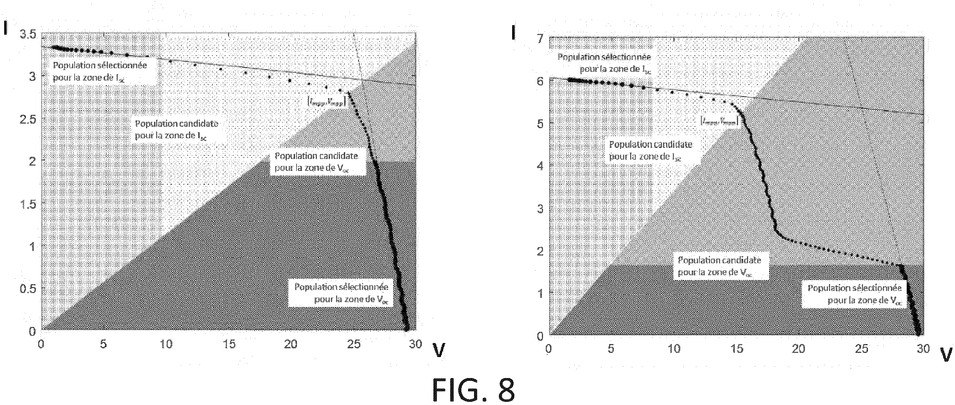

Le procédé selon un premier aspect de l'invention comprend ensuite une étape E2 de détection d'une première zone linéaire et d'une deuxième zone linéaire de la caractéristique I(V). Comme illustré à la figure 8, les deux extrémités de la courbe I(V) peuvent être approchées par un modèle linéaire (la figure 8 représente à gauche une caractéristique I(V) sans dérivation et donc sans inflexion et à droite une caractéristique I(V) avec dérivation et donc avec inflexion). Il s'agit donc de détecter les points de la courbe I(V) qui s'inscrive dans chacun de ces deux régimes quasi-linéaires. Dans un mode de réalisation illustré à la figure 7, afin d'identifier les zones quasi-linéaires, le procédé comprend une sous-étape E21 de détermination du point de puissance maximum dont les coordonnées sont données par ($I_{MPP}$, $V_{MPP}$) où $I_{MPP} \times V_{MPP}$ = max($I \times V$), c'est-à-dire que $I_{MPP}$ et $V_{MPP}$ sont le courant et la tension au point de puissance maximum. Les points situés au-dessus de la droite reliant (0,0) et ($I_{MPP}$, $V_{MPP}$) sont supposés candidats pour appartenir à première zone linéaire, dite zone linéaire proche de $I_{sc}$ (soit la zone linéaire en haut à gauche dans la caractéristique I(V)), et les points situés au-dessous de cette droite sont supposés candidats pour appartenir à la deuxième zone linéaire, dite zone linéaire proche de $V_{oc}$ (soit la zone linéaire en bas à droite dans la caractéristique I(V)). Cette séparation est illustrée à la figure 8, les zones hachurées correspondant aux candidats pour appartenir à la zone linéaire proche de $V_{oc}$ et les zones en pointillé correspondant aux candidats pour appartenir à la zone linéaire proche de $I_{sc}$.

Puis il comprend une sous-étape E22 de détermination du modèle linéaire de Y en fonction de W tel que Y = $a_{sc} \times W + b_{sc}$ pour la zone linéaire proche de $I_{sc}$ et du modèle linéaire de $W$ en fonction de Y tel que W = $a_{oc} \times Y + b_{oc}$ pour la zone linéaire proche de $V_{oc}$ de sorte à déterminer les paramètres $a_{sc}$, $b_{sc}$, $a_{oc}$ et $b_{oc}$.

Par exemple, si l'on s'intéresse à la zone linéaire proche de $V_{oc}$, une pluralité de valeurs k sont testées, la valeur de k étant incrémentée au fur et à mesure que l'on se rapproche de $V_{MPP}$ (autrement dit, V(k) > V(k+ 1)). A cette fin, pour chaque valeur de k, on détermine les coefficients $a_k$ et $b_k$ en effectuant une régression linéaire de la courbe $\{V(i)\}_{i=1,...,k}$ en fonction de $\{I(i)\}_{i=1,...,k}$ de sorte à obtenir une approximation linéaire W = $a_k \times Y + b_k$. Puis, chaque valeur de k est associée à une erreur, ladite erreur étant obtenue en sommant les coûts pour tous les i tels que V(i) > $V_{MPP}$ (les i étant incrémentés de la même manière que les k), le coût associé à un i étant donné par

$$\left(\frac{V(i)-(a_k \times I(i)+b_k)-V_{maxi}}{V(i)-V_{maxi}}\right)^2 \quad \text{si i < k et} \quad \exp\left(\frac{V(i)-(a_k \times I(i)+b_k)-V_{maxi}}{V(i)-V_{maxi}}\right) \quad \text{si i > k.}$$

Enfin, on détermine la valeur de k pour laquelle l'erreur est la plus faible, noté $k_{sol}$, les paramètres du modèle linéaire étant alors donné par $a_{oc} = a_{k_{sol}}$ et $b_{oc} = b_{k_{sol}}$. Les k points sont représentés sur la figure 8 par la zone hachurée foncée, les points tels que i > k et V(i) > $V_{MPP}$ étant quant à eux situés dans la zone hachurée claire. La droite en pointillé représente quant à elle la droite d'équation W = $a_{oc} \times Y + b_{oc}$.

De la même manière, si l'on s'intéresse à la zone linéaire proche de $I_{sc}$, une pluralité de valeurs k' sont testées, la valeur de k' étant incrémenté au fur et à mesure que l'on se rapproche de $I_{MPP}$ (autrement dit, I(k') > I(k' + 1)). A cette fin, pour chaque valeur de k', on détermine les coefficients $a_k$, et $b_k$, en effectuant une régression linéaire de la courbe de $\{I(i')\}_{i'=1,...,k'}$ en fonction de $\{V(i)\}_{i'=1,...,k'}$ de sorte à obtenir une approximation linéaire Y = $a_{k'} \times W + b_{k'}$. Puis, chaque valeur de k' est associée à une erreur, ladite erreur étant obtenue en sommant les coûts pour tous les i' tels que I(i') > $I_{MPP}$ (les i' étant incrémentés de la même manière que les k'), le coût associé à un i' étant donné par

$$\left(\frac{I(i\prime)-(a_k \times V(i')+b_{k\prime})-I_{maxi}}{I(i\prime)-I_{maxi}}\right)^2 \quad \text{si i' < k' et} \quad \exp\left(\frac{I(i')-(a_{k\prime} \times V(i')+b_{k\prime})-I_{maxi}}{I(i')-I_{maxi}}\right) \quad \text{si i' > k'.}$$

Enfin, on détermine la valeur de k' pour laquelle l'erreur est la plus faible, noté $k'_{sol}$, les paramètres du modèle linéaire étant alors donné par

$$a_{sc} = a_{k'_{sol}} \text{ et } b_{sc} = b_{k'_{sol}}.$$

Les k' points sont représentés sur la figure 8 par la zone en pointillé foncée, les points tels que i' > k' et I(i') > $I_{MPP}$ étant quant à eux situés dans la zone en pointillé claire. La droite en trait plein représente quant à elle la droite d'équation W = $a_{sc} \times Y + b_{sc}$.

A l'issue de l'étape de détection des zones linéaires de la caractéristique I(V), les paramètres $a_{sc}$, $b_{sc}$, $a_{oc}$ et $b_{oc}$ sont donc déterminés.

Dans un mode de réalisation, la valeur des paramètres $a_{sc}$, $b_{sc}$, $a_{oc}$ et $b_{oc}$ est comparée à des valeurs limites, la valeurfinale retenue étant la valeur du paramètre lui-même ou la valeur de la limite dépassée par ledit paramètre. Une première limite concerne $a_{sc}$ et peut être formulée comme suit :

$$-\frac{1}{R_p^{min}} \leq a_{sc} \leq -\frac{1}{R_p^{max}}$$

Une deuxième limite concerne $a_{oc}$ et peut être formulée comme suit :

$$-R_s^{max} \leq a_{oc} \leq -R_s^{min}$$

Une troisième limite concerne $b_{sc}$ et peut être formulée comme suit :

$$I_{sc}^{min} \leq b_{sc} \leq I_{sc}^{max}$$

Cette limite est différente de la limite présentée précédemment car, lors de la phase d'initialisation, aucune estimation du paramètre $R_s$ n'est disponible. Bien entendu, lorsqu'une estimation de ce paramètre est disponible, la définition de la limite concernant $b_{sc}$ à utiliser est celle présentée au paragraphe détaillant les différentes limites.

Une quatrième limite concerne $b_{oc}$ et peut être formulée comme suit :

$$V_{oc}^{min} \leq b_{oc} \leq V_{oc}^{max}$$

Comme déjà mentionné, la valeur finale retenue est la valeur du paramètre lui-même ou la valeur de la limite dépassée par ledit paramètre. Ainsi, par exemple, si la valeur de $a_{sc}$ est bien comprise entre $-\frac{1}{R_p^{min}}$ et $-\frac{1}{R_p^{max}}$, alors cette dernière n'est pas modifiée. En revanche, si $a_{sc} > -\frac{1}{R_p^{max}}$ alors la valeur de $a_{sc}$ sera choisie comme étant égale à $-\frac{1}{R_p^{max}}$. De même, si $a_{sc} < -\frac{1}{R_p^{min}}$ alors la valeur de $a_{sc}$ sera choisie comme étant égale à $-\frac{1}{R_p^{min}}$.

Le procédé comprend ensuite une étape E3 d'initialisation des paramètres du modèle électrique sans dérivation. Comme présenté précédemment, les paramètres du modèle électrique sans dérivation sont $I_{ph}$, $R_s$, $R_p$, $I_0$ et N. Dans un mode de réalisation, $R_p$ est donné par $R_p = -\frac{1}{a_{sc}}$ ; N est donné par $N = \frac{k}{q} \times N_s \times T_{init}$ avec $T_{init} \in [200,300]$, de préférence $T_{init} \in [230,240]$, voire $T_{init} = 233.15$ (soit une température d'environ -40°C) ; $I_0$ est donné ar

$$I_0 = \frac{R_p \times b_{sc} - b_{oc}}{R_p\left(e^{\frac{b_{oc}}{N}} - 1\right)}$$

ce qui garantit que la valeur de $V_{oc}$ restera proche de $b_{oc}$; $R_s$ est donné par $R_s = -a_{oc} - \frac{N \times R_p}{N + I_0 \times R_p \times e^{\frac{b_{oc}}{N}}}$ ce qui garantit que la dérivée de la courbe I(V) à proximité de $V_{oc}$ est proche de $a_{oc}$ ; et $I_{ph}$ est donné par

$$I_{ph} = \frac{R_p + R_s}{R_p} \times b_{sc} + I_0 \times \left(e^{\frac{R_s \times b_{sc}}{N}} - 1\right)$$

ce qui garantit que $I_{sc}$ est proche de $b_{sc}$.

Dans un mode de réalisation, la valeur des paramètres $I_{ph}$, $R_s$, $R_p$, $I_0$ et N est comparée aux valeurs limites définies plus haut, la valeur finale retenue étant la valeur du paramètre lui-même ou la valeur de la limite dépassée par ledit paramètre.

Optimisation des paramètres du modèle sans dérivation

A l'issue de cette étape, tous les paramètres du modèle sans dérivation ont été initialisés. Cette initialisation a été effectuée à partir des zones linéaires de la courbe I(V) et en s'assurant que les paramètres ainsi déterminés respectaient certaines limites. Afin d'améliorer la justesse de ces paramètres, le procédé comprend ensuite une étape E4 d'optimisation des paramètres du modèle électrique sans dérivation à partir d'une caractéristique de référence I($V_{ref}$) égale à I(V). Bien entendu, à partir de la caractéristique de référence *I($V_{ref}$)* signifie également que la caractéristique $V_{ref}$(I) correspondante est considérée.

Il est cependant très couteux en temps de calcul (mais pas impossible y compris dans le cadre de la présente invention) d'optimiser simultanément l'ensemble des 5 paramètres du modèle électrique sans dérivation. Il peut donc être avantageux de diviser l'optimisation en plusieurs étapes. Pour cela, dans un mode de réalisation, deux composantes dont l'optimisation est relativement aisée sont considérées : une composante linéaire et une composante exponentielle. Pour rappel, le modèle électrique sans dérivation peut être mis sous la forme suivante :

$$Y = I_{ph} - \frac{W_{th} + R_s \times Y}{R_p} - I_0 \times \left(e^{\frac{W_{th} + R_s \times Y}{N}} - 1\right)$$

Dans la suite, la composante $I_{ph} - \dfrac{W_{th}+R_s \times Y}{R_p}$ sera désignée sous le nom de composante linéaire et la composante $I_0 \times \left(e^{\frac{W_{th}+R_s \times Y}{N}} - 1\right)$ sera désignée sous le nom de composante exponentielle.

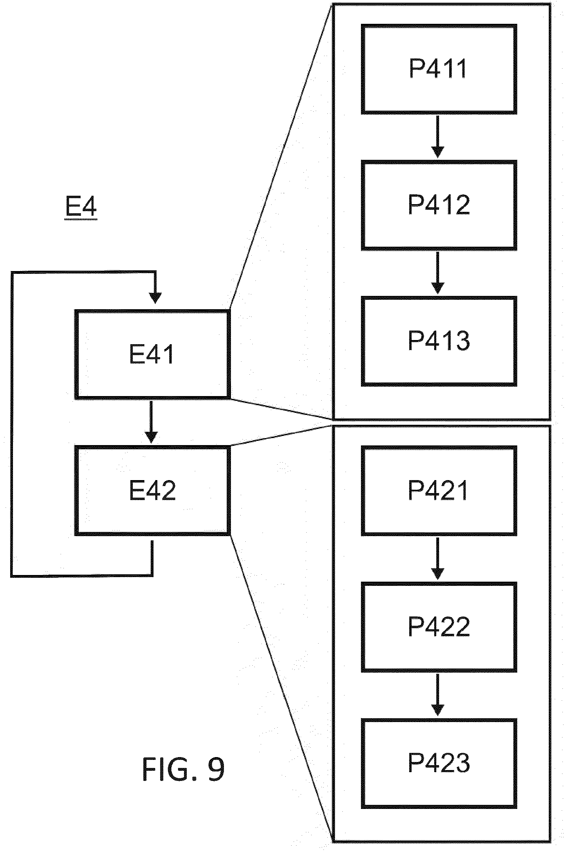

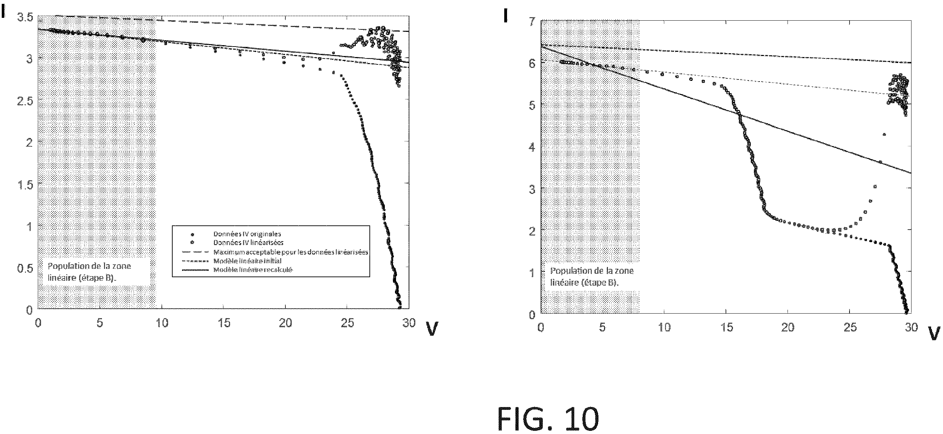

Dans un mode de réalisation illustré à la figure 9, l'étape E4 d'optimisation des paramètres du modèle électrique sans dérivation comprend une première sous-étape E41 d'optimisation des paramètres de la composante linéaire du modèle électrique. Dans un mode de réalisation, cette sous-étape comprend elle-même une première phase P411 de détermination d'une caractéristique linéaire en additionnant $I_0 \times \left(e^{\frac{V+R_s \times I}{N}} - 1\right)$ à la caractéristique $I(V_{ref})$ de sorte à obtenir $I_{lineaire}(V)$. Cette addition peut être vue comme la déformation des données expérimentales de la caractéristique $I(V_{ref})$ de sorte à pourvoir déterminer la composante linéaire de cette dernière. Cette compensation est illustré à la figure 10 (le graphique de gauche est relatif à une caractéristique $I(V_{ref})$ sans dérivation tandis que celui de droite est relatif à une caractéristique $I(V_{ref})$ avec dérivation) dans laquelle les points noirs correspondent à la mesure de $I(V_{ref})$ tandis que les points blancs cerclés de noir correspondent à la courbe $I_{lineaire}(V)$, c'est-à-dire la courbe obtenue après compensation de la composante exponentielle. Autrement dit, le courant linéaire $I_{lineaire}(V)$ peut être formulé comme étant :

$$I_{lineaire} = I(V_{ref}) + I_0 \times \left(e^{\frac{V+R_s \times I}{N}} - 1\right)$$

De plus, lors du calcul de $I_{lineaire}(V)$, $I_{lineaire}$ est limité à une valeur maximale $\dfrac{2 \times R_p \times 1.05 \times \max\left(I_{ph}, \max(I(V_{ref}))\right) - V}{2 \times R_p + R_s}$ afin d'éviter qu'une mauvaise estimation des paramètres n'ait pour conséquence une « explosion » des valeurs. Cette vérification est illustrée à la figure 10 sur laquelle la courbe en tiret long illustre cette limite à ne pas dépasser, les points se trouvant au-dessus de cette limite étant alors ramenés au niveau de ladite limite. On remarquera que dans la figure 10 les points blancs cerclés de noir ne forment pas une droite comme on pourrait s'y attendre. Cela est dû à une mauvaise estimation de la composante exponentielle qui sera améliorée lors des différentes itérations des sous-étapes de l'étape E4 d'optimisation des paramètres du modèle électrique sans dérivation.

Une fois que $I_{lineaire}(V)$ a été déterminée, la première sous-étape E41 d'optimisation des paramètres de la composante linéaire comprend également une deuxième phase P412 de détermination d'une régression linéaire de l'équation $I = a_{sc} \times V + b_{sc}$ à partir de la courbe $I_{lineaire}(V)$ de sorte à déterminer une nouvelle estimation des paramètres $a_{sc}$ et $b_{sc}$. Sur la figure 10, la droite en tiret court montre le modèle linéaire initial tandis que la courbe en trait plein montre le nouveau modèle linéaire correspondant aux nouvelles valeurs des paramètres $a_{sc}$ et $b_{sc}$. De plus, lors de cette phase de régression linéaire, les limites dans la valeur des paramètres $a_{sc}$ et $b_{sc}$ présentées auparavant sont à nouveau vérifiées.

Enfin, la première sous-étape E41 d'optimisation des paramètres de la composante linéaire comprend également une troisième phase P413 de détermination des paramètres de la composante linéaire du modèle, ces derniers étant calculés comme suit :

$$R_p = -\frac{1}{a_{sc}} - R_s$$

$$I_{ph} = b_{sc} \times \left(1 - \frac{R_s}{R_p}\right) = -\frac{b_{sc}}{1 + a_{sc} \times R_s}$$

Ces paramètres sont déterminés de sorte que le modèle passe effectivement par le point $(0,b_{sc})$ et que la dérivée de la courbe sur ce point soit compatible avec l'estimation de la composante linéaire. Elle s'appuie sur l'hypothèse que les valeurs des autres paramètres du modèle sont correctement estimées.

Dans un mode de réalisation, la phase de régression linéaire qui vient d'être décrit est effectuée en considérant les $k'_{sol}$ points déterminés lors de l'étape E2 de détection des zones linéaire de la caractéristique I(V). Dans un mode de réalisation, la phase de régression linéaire est effectuée en considérant les $k'_{sol}$ lors de la première itération de la première sous-étape E41 d'optimisation des paramètres de la composante linéaire, un nombre de points croissant étant considéré pour les itérations suivantes de ladite sous-étape de sorte à prendre en compte dans un premier temps tous les points situés à gauche de la droite passant par {0,0} et {$I_{MPP}$, $V_{MPP}$} puis tous les points de la courbe $I_{lineaire}(V)$. Le nombre de points inclus lors de chaque itération sera par exemple fonction du nombre total d'itérations. Par exemple, si le nombre total d'itération est égale à dix, on peut introduire à chaque itération 1/10 des points aux points déjà pris en compte.

De plus l'étape E4 d'optimisation des paramètres du modèle électrique sans dérivation comprend également une sous-étape E42 d'optimisation des paramètres de la composante exponentielle du modèle électrique sans dérivation. Dans un mode de réalisation, cette sous-étape comprend elle-même une première phase P421 de détermination d'une caractéristique $V_{lineaire}(I) = V_{ref}(I) - W_{th}(I) + b_{oc} + a_{oc} \times I$ où $a_{oc}$ et $b_{oc}$ font référence à la précédente estimation desdits paramètres. Pour rappel, le modèle électrique sans dérivation peut se mettre sous la forme suivante :

$$W_{th}(Y) = R_p \times I_{ph} + \left(R_s + R_p\right) \times Y - R_p \times I_0 \times \left(e^{\frac{W_{th}+R_s \times Y}{N}} - 1\right)$$

Cette caractéristique $V_{lineaire}(I)$ correspond aux valeurs de $V_{ref}(I)$ pour lesquelles la composante exponentielle est compensée (et devrait donc être proche d'un modèle affin lorsque les paramètres du modèle I(V) sont correctement estimés).

Une fois que $V_{lineaire}(I)$ a été déterminée, la sous-étape E42 d'optimisation des paramètres de la composante exponentielle comprend également une deuxième phase P422 de détermination d'une régression linéaire de l'équation $W = a_{oc} \times Y + b_{oc}$ à partir de la courbe $V_{lineaire}(I)$ de sorte à déterminer une nouvelle estimation des paramètres $a_{oc}$ et $b_{oc}$, le coût associé à un point i de la courbe $V_{lineraire}(I)$ étant calculé à l'aide de la formule suivante : $\frac{max(I)-I(i)}{somme(max(I)-I(i))}$ où somme(x) est la somme de tous les $x_i$, $x_i$ représentant une valeur que peut prendre la variable x.

Dans un mode de réalisation, la phase de régression linéaire est effectuée en considérant les $k_{sol}$ points déterminés lors de l'étape E2 de détection des zones linéaire de la caractéristique I(V). Dans un mode de réalisation, la phase de régression linéaire est effectuée en considérant les $k_{sol}$ points lors de la première itération de la sous-étape E42 d'optimisation des paramètres de la composante exponentielle, un nombre de points croissant étant considéré pour les itérations suivantes de ladite sous-étape de sorte à prendre en compte dans un premier temps tous les points situés à droite de la droite passant par {0,0} et {$I_{MPP}$, $V_{MPP}$} puis tous les points de la courbe $V_{lineaire}(I)$.

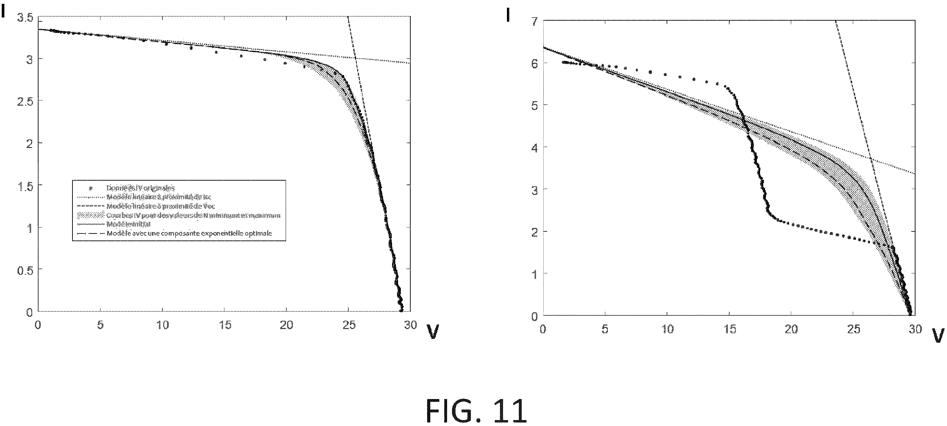

De plus, comme illustré à la figure 11, la sous-étape E42 de détermination des paramètres de la composante exponentielle comprend également une troisième phase P423 de détermination des paramètres N, $I_0$ et $R_s$. Pour n'importe quelle valeur de N noté $\hat{N}$ dans l'intervale [$N^{min}$,$N^{max}$], il est possible de calculer des valeurs $\widehat{R_s}$ $\widehat{I_0}$ afin que le modèle reste proche du modèle linéaire à proximité de $V_{oc}$. Pour cela, il est imposé les relations suivantes :

$$\widehat{I_0} = \frac{R_p \times I_{ph} - b_{oc}}{R_p \times \left(e^{\frac{b_{oc}}{N}} - 1\right)}$$

$$\widehat{R_s} = -a_{oc} - \frac{\hat{N} \times R_p}{\left(R_p \times I_{ph} - b_{oc}\right) + R_p \times \widehat{I_0} + \hat{N}}$$

Comme précédemment, les valeurs maximales ainsi déterminées sont encadrées et éventuellement corrigées pour respecter ledit encadrement. En effectuant un tel calcul, il est possible de s'apercevoir que les modèles donnant $\widehat{W_{th}}$ et associés aux valeurs $\hat{N}$, $\widehat{I_0}$, $\widehat{R_s}$, $I_{ph}$ et $R_p$ diffèrent principalement en ce qu'ils sont plus lisses lorsque $\hat{N}$ augmente et ont au contraire tendance à se rapprocher d'une courbe « pointue » lorsque $\hat{N}$ diminue correspondant au deux modèles linéaires décrit par les constantes $a_{sc}$, $b_{sc}$, $a_{oc}$ et $b_{oc}$. Il est donc possible de supposer que la fonction $S\left(\widehat{W_{th}}, V_{ref}\right)$ déjà introduite et qui associe à $\hat{N}$ la proximité entre le modèle correspondant à la valeur $\hat{N}$ et les données $V_{ref}$ soit une fonction convexe. Il est donc possible d'optimiser la valeur de $\hat{N}$ en s'appuyant sur la fonction de coût $S\left(\widehat{W_{th}}, V_{ref}\right)$. L'évolution $\widehat{W_{th}}$ pour différente valeur de $\hat{N}$ est illustré à la figure 11. Plus particulièrement, la borne supérieure de la zone hachurée correspond au calcul de $\widehat{W_{th}}$ avec $\hat{N} = N^{min}$ tandis que la borne inférieure de la zone hachurée correspond au calcul de $\widehat{W_{th}}$ avec $\hat{N} = N^{max}$. La courbe en trait plein correspond au calcul de $\widehat{W_{th}}$ pour la valeur de N initiale. La courbe en tiret long correspond quant à elle au calcul de $\widehat{W_{th}}$ permettant d'obtenir la fonction de coût $S\left(\widehat{W_{th}}, V_{ref}\right)$ la plus faible.

Ainsi, on détermine la valeur $\hat{N}$ permettant de minimiser la fonction de coût $S\left(\widehat{W_{th}}, V_{ref}\right)$, cette valeur correspondant à la valeur de N recherchée. Les paramètres $R_s$ et $I_0$ peuvent ensuite être déterminés en utilisant la valeur N obtenue. L'optimisation peut par exemple se faire à l'aide d'une méthode par dichotomie en choisissant pour valeur minimale et maximale de $\hat{N}$ la moitié et le double de la valeur courante de N. De plus, à chaque étape du calcul par dichotomie, les valeurs de $\hat{N}$, $\widehat{I_0}$ et $\widehat{R_s}$ sont vérifiées et corrigées afin qu'elles restent dans les intervalles définis précédemment.

Bien entendu, durant l'étape E4 d'optimisation des paramètres du modèle électrique, la première sous-étape E41 d'optimisation des paramètres de la composante linéaire du modèle électrique et la sous-étape E42 de d'optimisation des paramètres de la composante exponentielle du modèle électrique sont itérées une pluralité de fois de sorte à améliorer le modèle, les paramètres déterminés lors d'une itération étant utilisés lors de l'itération suivante. Autrement dit les paramètres déterminé lors de la première sous-étape E41 d'optimisation des paramètres de la composante linéaire du modèle électrique sont utilisés lors de la sous-étape E42 d'optimisation des paramètres de la composante exponentielle suivante et les paramètres déterminés lors de la sous-étape E42 d'optimisation des paramètres de la composante exponentielle sont utilisés lors de la première sous-étape E41 d'optimisation des paramètres de la composante linéaire du modèle électrique suivante (sauf lors de la dernière itération bien entendu).

Dans un mode de réalisation, le nombre d'itérations est égal à un nombre prédéfini, par exemple un nombre d'itérations égal à 30. Dans un mode de réalisation, alternatif ou complémentaire, la première sous-étape E41 d'optimisation des paramètres de la composante linéaire du modèle électrique et la sous-étape E42 d'optimisation des paramètres de la composante exponentielle du modèle électrique sont itérées jusqu'à ce que $$\left| S_{i+1}\left(\widehat{W_{th}}, V_{ref}\right) - S_i\left(\widehat{W_{th}}, V_{ref}\right) \right| < \varepsilon$$ où $S_{i+1}\left(\widehat{W_{th}}, V_{ref}\right)$ est l'évaluation du modèle à l'itération i avec $\varepsilon$ un critère de convergence défini, c'est-à-dire lorsque le modèle n'est sensiblement plus amélioré entre deux itérations.

A l'issue de la dernière itération de l'étape E4 d'optimisation des paramètres du modèle électrique sans dérivation, on dispose donc d'un modèle $W_{th}$ sans dérivation. Cependant, lorsqu'une dérivation est effectivement présente, ce modèle ne permet pas de rendre compte de la tension V aux bornes de la chaine de modules. Il convient donc également de déterminer un modèle avec dérivation pour ensuite choisir le meilleur des deux modèles (les critères de sélection seront précisés dans la suite).

Détermination des paramètres du modèle avec dérivation

Lorsque la chaine de modules est constituée d'un ensemble de plusieurs sous-chaines protégées par des diodes de « by-pass », il est possible d'observer des comportements différents sur certaines sous-chaines. Un exemple emblématique de la présence d'une dérivation est celui de l'ombrage partiel : un ensemble de sous-chaines est éclairé à un niveau moindre que le reste de la chaine. Dans ce cas, suivant la tension fixée, la sous-chaine moins performante est « by-passée » afin d'éviter qu'elle ne se mette en position de consommer l'énergie produite par le reste de la chaine. On constate alors une inflexion sur la courbe I(V), la position de cette inflexion (sur l'axe de la tension) informant de la proportion de sous-chaines « by-passé » et la hauteur (sur l'axe du courant) informant sur le niveau de perte associé par rapport au reste de la chaine. Dans la suite, il sera considéré qu'il ne peut pas y avoir plus de deux sous-chaines. Un autre choix mène à un nombre de cas combinatoire avec le nombre de diodes de « by-pass » de la chaine. En pratique, l'on s'aperçoit que les résultats en cas de plus de deux sous-chaines restent généralement bons : l'inflexion principale est bien détectée et localisée ; les autres inflexions étant alors négligées. Autrement dit, la supposition de deux sous-chaines est faite dans un but calculatoire mais n'empêche pas l'utilisation d'un procédé selon un premier aspect de l'invention dans des cas où plus de deux sous-chaines sont considérées.

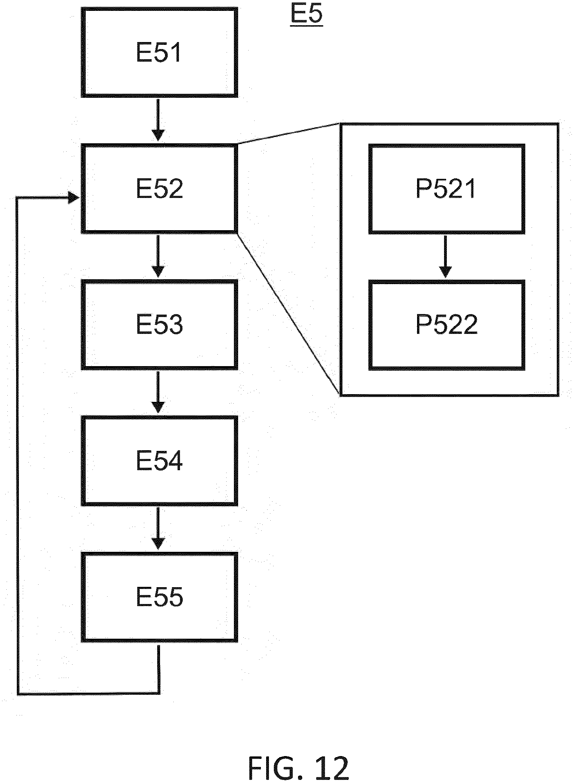

Afin de prendre en compte cet aspect de la mesure et comme illustré à la figure 12, le procédé selon un premier aspect de l'invention comprend une étape E5 de détermination des paramètres du modèle électrique avec dérivation à partir de la caractéristique I(V).

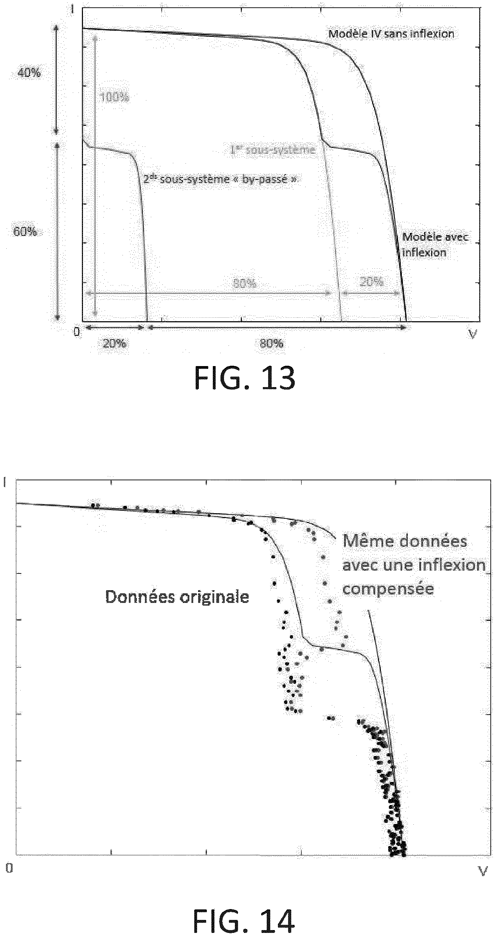

Afin de caractériser la déformation de la courbe I(V) induite par l'effet de dérivation, l'étape E5 de détermination des paramètres du modèle électrique avec dérivation comprend une première sous-étape E51 d'initialisation du paramètres $P_d$ qui représente la proportion de diodes de « by-pass » (et donc la proportion de sous-chaines) potentiellement « by-passées » (égale à 20% sur la figure 13), à partir de la position de l'inflexion sur l'axe représentant V ; et du paramètre $P_I$ représentant la perte de courant en court-circuit induit sur la première chaine (égale à 40% sur la figure 13) à partir de la position de l'inflexion sur l'axe représentant I. Ainsi, comme illustré à la figure 13, l'inflexion de la courbe I(V) peut être caractérisée par ces deux paramètres.

A partir de ces deux paramètres, il est possible de déterminer un modèle en utilisant les paramètres déterminés lors de l'étape E4 d'optimisation des paramètres du modèle électrique sans dérivation à partir d'une caractéristique de référence $I(V_{ref})$ égale à I(V) ou les paramètres déterminés lors de la sous-étape E55 d'optimisation du modèle sans dérivation à partir d'une caractéristique de référence $I(V_{ref})$ égale à $I(V_{unshaded})$ (sous-étape qui sera décrite dans la suite). Pour cela, l'étape E5 de détermination des paramètres du modèle électrique avec dérivation comprend une deuxième sous-étape E52 de calcul de la caractéristique $W_{mod}(I)$ du modèle avec dérivation. Cette sous-étape E52 comporte une première phase P521 de calcul de la caractéristique V(I) de la première sous-chaine noté $V_1(I)$ cette dernière étant donnée par :

$$W_1(Y) = (1 - P_d) \times W_{th}(Y)$$

La sous-étape E52 de calcul de la caractéristique V(I) du modèle avec dérivation comprend également une deuxième phase P522 de calcul de la caractéristique V(I) de la deuxième sous-chaine noté $V_2(I)$ cette dernière étant donnée par :

$$W_2(Y) = P_d \times W_{th}\left(\frac{Y}{1 - P_I}\right)$$

Le modèle avec dérivation, noté $W_{mod}(I)$ est obtenu en additionnant les deux contributions décrite ci-dessus :

$$W_{mod}(Y) = W_1(Y) + W_2(Y)$$

Il est utile de noter que le modèle $W_{th}(Y)$ correspondant au modèle sans dérivation est supposé correct lors de cette étape.

L'étape E5 de détermination des paramètres du modèle électrique avec dérivation comprend ensuite une troisième sous-étape E53 d'optimisation des paramètres du modèle avec dérivation $W_{mod}(Y)$ à l'aide de la métrique $S(W_{mod}, V)$ définie auparavant et à partir de la caractéristique I(V). Cette optimisation peut par exemple être effectuée par une méthode de descente de gradient telle qu'une méthode du simplex. A l'issue de cette optimisation, les paramètres $P_I$ et $P_d$ permettant le meilleur accord avec les mesures sont retenus. Lors de cette optimisation, le respect des valeurs limites des paramètres $P_I$ et $P_d$ est bien entendu vérifié, et ce à chaque itération de l'algorithme de dichotomie.

L'étape E5 de détermination des paramètres du modèle électrique avec dérivation comprend une quatrième sous-étape E54 de déformation de la courbe I(V) de sorte à compenser la dérivation. Comme illustré à la figure 14, cette déformation peut être effectuée à l'aide des paramètres $P_I$ et $P_d$ ainsi que du modèle sans dérivation en appliquant une déformation inverse de celle induite par la dérivation et ainsi obtenir une caractéristique $V_{unshaded}(I)$ ainsi que la caractéristique $I(V_{unshaded})$ correspondante. En effet, à partir des paramètres $P_I$ et $P_d$ et du modèle sans dérivation, il est possible d'estimer la déformation induite sur les tensions en fonction du courant et d'appliquer la déformation inverse sur les tensions mesurées afin de produire une estimation des points que l'on aurait obtenus si cette déformation n'avait pas été présente.

Il est ensuite possible de réévaluer le modèle sans dérivation en utilisation cette nouvelle caractéristique $I(V_{unshaded})$. Pour cela, l'étape E5 de détermination des paramètres du modèle électrique avec dérivation comprend une sous-étape E55 d'optimisation du modèle sans dérivation à l'aide d'une caractéristique de référence $I(V_{ref})$ égale à $I(V_{unshaded})$ nouvellement obtenue. La sous-étape de réévaluation est donc identique à l'étape E4 de détermination des paramètres du modèle électrique sans dérivation à l'exception du fait que cette étape de détermination se fait à l'aide de la caractéristique de la caractéristique $I(V_{unshaded})$.

Bien entendu, les deuxième, troisième, quatrième et cinquième sous-étapes sont itérées une pluralité de fois de sorte à obtenir un modèle électrique avec dérivation à partir du modèle sans dérivation réévalué et des paramètres $P_d$ et $P_I$. Il apparait également évident de ce qui précède que les paramètres déterminés lors d'une itération sont utilisés lors de l'itération suivante. Dans un mode de réalisation, le nombre d'itérations est égal à un nombre prédéfini, par exemple un nombre d'itérations égal à 30. Dans un mode de réalisation, alternatif ou complémentaire, les deuxième, troisième, quatrième et cinquième sous-étapes de l'étape E5 de détermination des paramètres du modèle électrique avec dérivation sont itérées jusqu'à ce que $|S_{i+1}(W_{mod}, V) - S_i(W_{mod}, V)| < \varepsilon$ où $S_i(W_{mod}, V)$ est l'évaluation du modèle avec dérivation à l'itération i avec $\varepsilon$ un critère de convergence défini, c'est-à-dire lorsque le modèle n'est sensiblement plus amélioré entre deux itérations.

A l'issue de l'étape E5 de détermination des paramètres du modèle électrique avec dérivation, on obtient donc le modèle avec dérivation $W_{mod}(Y)$ exprimé à l'aide du modèle sans dérivation optimisé durant ladite étape ainsi que des paramètre $P_d$ et $P_I$ de la dérivation déterminés et optimisés durant ladite étape. Il convient donc maintenant de comparer ce dernier au modèle $W_{th}$ sans dérivation afin de déterminer le modèle le plus proche des données expérimentales $V(I)$.

Conservation du meilleur modèle

A l'issue de l'étape E5 de détermination des paramètres du modèle électrique avec dérivation, deux modèles ont été déterminés : un modèle sans dérivation $W_{th}(Y)$ et un modèle avec dérivation $W_{mod}(Y)$. Il convient cependant de déterminer, parmi ces deux modèles, lequel convient le mieux pour la description de la chaine de modules mesurée. Comme cela a déjà été présenté, l'écart entre les prédictions d'un modèle peut être mesuré à l'aide d'une fonction de coût notée S. La fonction de coût associée au modèle sans dérivation est donnée par $S(W_{th}, V)$ tandis que la fonction de coût associée au modèle avec dérivation est donnée par $S(W_{mod}, V)$.

Dans un mode de réalisation, le modèle sélectionné est le modèle associé à la fonction de coût la plus faible, c'est-à-dire dont les prévisions sont les plus proches des données mesurées. Ainsi, si $S(W_{th}, V) \geq S(W_{mod}, V)$ alors le modèle sans dérivation est sélectionné, le modèle avec dérivation étant sélectionné dans le cas contraire.

Dans certains cas, le critère présenté ci-dessus peut conduire à la sélection d'un modèle avec dérivation (et reposant sur un plus grand nombre d'hypothèses) alors qu'un modèle sans dérivation conviendrait parfaitement. Afin d'éviter ce cas de figure, dans un mode de réalisation lorsque $S(W_{th}, V) - S(W_{mod}, V) < \dfrac{S(0,V)}{500}$ alors le modèle sans dérivation est sélectionné même si ce dernier possède une fonction de coût plus élevé que le modèle avec dérivation sous réserve que $P_d$ soit compris dans l'intervalle $\left[P_d^{min}, P_d^{max}\right]$ et que $P_I$ soit compris dans l'intervalle $\left[P_I^{min}, P_I^{max}\right]$.

Détection des anomalies de la chaine de modules

Comme on vient de le voir en détail, il est possible de déterminer, à partir d'une caractéristique $I(V)$ relative à une chaine de modules, le modèle électrique dudit module. La valeur que prennent les paramètres du modèle ainsi déterminés est porteuse d'information, notamment sur d'éventuelles anomalies de la chaine. Un deuxième aspect de la présente invention propose donc un procédé de détection d'une anomalie dans une chaine de modules photovoltaïque. Le procédé comprend une première étape de détermination du modèle électrique de la chaine de modules à l'aide d'un procédé selon un premier aspect de l'invention. Il comprend ensuite une étape de détection d'une anomalie en fonction de la valeur d'au moins un paramètre du modèle électrique déterminé. Par exemple, une anomalie correspondant à une résistance anormale pourra être détectée lorsque la résistance série estimée (ramenée aux conditions standards de température et de rayonnement) par le modèle est supérieure à deux fois la valeur habituelle moyenne (par exemple déterminée à partir de données constructeurs ou de mesures antérieures). Dans un mode de réalisation, l'évolution des paramètres du modèle sont évaluées à intervalles réguliers de sorte à observer une évolution dans lesdits paramètres, une anomalie étant détectée lorsque la valeur d'au moins un paramètre s'éloigne de la valeur initiale dudit paramètre au-delà d'un seuil prédéfini, par exemple de plus de 10% de la valeur initiale.

Dispositif de mise en œuvre

Afin de mettre en œuvre le procédé selon un premier aspect ou un deuxième aspect de l'invention, un troisième aspect concerne un dispositif comprenant les moyens nécessaires à cette mise en œuvre. Dans un mode de réalisation, le dispositif comprend une unité de calcul (par ex. un processeur, un FPGA ou une carte ASIC) associé à une mémoire. La mémoire peut contenir les instructions ainsi que les variables nécessaires à l'exécution d'un procédé selon un premier aspect ou un deuxième aspect de l'invention. Dans un mode de réalisation, le dispositif comprend également des moyens d'acquisition de données. Dans un mode de réalisation, ces moyens d'acquisition comprennent des moyens de connexion à un réseau (par ex. une carte WiFi ou Ethernet) et/ou à un bus afin de pouvoir recevoir les données nécessaires à l'exécution d'un procédé selon un premier aspect ou un deuxième aspect de l'invention, et notamment la caractéristique I(V). Dans un mode de réalisation, le dispositif comprend des moyens pour lire un support de données (par ex. un lecteur DVD) sur lequel sont stockées les données nécessaires à l'exécution d'un procédé selon un premier aspect ou un deuxième aspect de l'invention. Dans un mode de réalisation, le dispositif comprend les moyens nécessaires à l'acquisition de la courbe I(V).

**Revendications**

1. Procédé (100) de détermination d'un modèle électrique d'une chaine de modules photovoltaïques à partir d'une caractéristique I-V de ladite chaine et d'un modèle sans dérivation correspondant à une première condition de fonctionnement de la chaine, dite condition sans dérivation, donné par l'équation suivante :

$$Y = I_{ph} - \frac{W_{th} + R_s \times Y}{R_p} - I_0 \times \left( e^{\frac{W_{th} + R_s \times Y}{N}} - 1 \right)$$

avec $I_{ph}$ le photo-courant, $R_s$ la résistance en série, $R_p$ la résistance en parallèle, $I_0$ le courant d'obscurité de la diode, $N = \frac{k}{q} \times N_s \times T_{ideal}$ avec $T_{ideal} \in [200,300]$, $N_s$ le nombre de cellules en série dans la chaine, $k_b$ est la constante de Boltzmann et q est la charge élémentaire d'un proton, $Y$ le courant traversant la chaine et $W_{th}$ la tension aux bornes de la chaine ; et d'un modèle avec dérivation correspondant à une deuxième condition de fonctionnement de la chaine, dite condition avec dérivation et donné par l'équation suivante :

$$W_{mod}(Y) = W_1(Y) + W_2(Y)$$

avec $W_{mod}$ la tension aux bornes de la chaine selon le modèle avec dérivation pour le courant $Y$, $W_1(Y) = (1 - P_d) \times W_{th}(Y)$ et $W_2(Y) = P_d \times W_{th}\left( \frac{Y}{1-P_I} \right)$ où $W_{th}(Y)$ est la tension aux bornes de la chaine donnée par le modèle sans dérivation, $P_d$ la proportion de diodes de « by-pass » et $P_I$ la proportion de perte de courant en court-circuit induit par le « by-pass », le procédé comprenant :

- une étape (E2) de détection d'une première zone linéaire et d'une deuxième zone linéaire de la caractéristique I-V ;
- une étape (E3) d'initialisation des paramètres du modèle électrique sans dérivation à partir de la caractéristique I-V ;
- une étape (E4) d'optimisation des paramètres du modèle électrique sans dérivation à partir d'un caractéristique de référence I(V$_{ref}$) égale à I(V) ;
- une étape (E5) de détermination des paramètres du modèle électrique avec dérivation, afin d'obtenir un modèle électrique avec dérivation à partir de la caractéristique I-V ;

- une étape (E6) de détermination, à partir de la caractéristique I-V, du meilleur modèle parmi le modèle sans dérivation et le modèle avec dérivation.

2. Procédé selon la revendication précédente **caractérisé en ce qu'**il comprend, avant l'étape (E2) de détection des zones linéaires de la caractéristique I-V, une étape (E1) de vérifications des données de la caractéristique I-V.

3. Procédé selon la revendication précédente **caractérisé en ce que** l'étape (E1) de vérifications des données de la caractéristique I-V comprend au moins l'une des deux sous-étapes suivantes :

   - une sous-étape (E11) de détection de la période de commutation de la chaine, les données mesurées en dehors de la période de commutation étant supprimées ;
   - une sous-étape (E12) de suppression des données aberrantes.

4. Procédé selon l'une des revendications précédentes **caractérisé en ce que** l'étape (E2) de détection d'une première zone linéaire et d'une deuxième zone linéaire de la caractéristique I-V comprend :

   - une sous-étape (E21) de détermination du point de puissance maximum ($I_{MPP}$, $V_{MPP}$), les points de la caractéristique I-V situés au-dessus de la droite passant par l'origine (0,0) et le point ($I_{MPP}$, $V_{MPP}$) étant considérés comme candidats à la première zone linéaire, et les points situés au-dessous de la cette droite étant considérés comme candidats à la deuxième zone linéaire ;
   - une sous-étape (E22) de détermination du modèle linéaire du courant $Y$ en fonction de la tension $W$ aux bornes de la chaine tel que $Y = a_{sc} \times W + b_{sc}$ à partir des points candidats à la première zone linéaire et du modèle linéaire de la tension $W$ aux bornes de la chaine en fonction du courant $Y$ tel que $W = a_{oc} \times Y + b_{oc}$ à partir des points candidats à la deuxième zone linéaire, de sorte à déterminer les paramètres $a_{sc}$, $b_{sc}$, $a_{oc}$ et $b_{oc}$.

5. Procédé selon la revendication précédente **caractérisé en ce que** lors de l'étape E3 d'initialisation des paramètres du modèle électrique sans dérivation, les paramètres du modèle électrique $I_{ph}$, $R_s$, $R_p$, $I_0$ et $N$ sont initialisé de la manière suivante :

   - $R_p$ est donné par
   $$R_p = -\frac{1}{a_{sc}} \; ;$$

   - $N$ est donné par
   $$N = \frac{k}{q} \times N_s \times T_{ideal}$$
   avec $T_{ideal} \in [200,300]$ ;

   - $I_0$ est donné par
   $$I_0 = \frac{R_p \times b_{sc} - b_{oc}}{R_p \left( e^{\frac{b_{oc}}{N}} - 1 \right)} \; ;$$

   - $R_s$ est donné par
   $$R_s = -a_{oc} - \frac{N \times R_p}{N + I_0 \times R_p \times e^{\frac{b_{oc}}{N}}} \; ;$$
   et

   - $I_{ph}$ est donné par
   $$I_{ph} = \frac{R_p + R_s}{R_p} \times b_{sc} + I_0 \times \left( e^{\frac{R_s \times b_{sc}}{N}} - 1 \right) .$$

6. Procédé selon l'une des revendications précédentes **caractérisé en ce que** le modèle comprend une composante linéaire et une composante exponentielle et que l'étape (E4) d'optimisation des paramètres du modèle électrique sans dérivation comprend :

   - une première sous-étape (E41) d'optimisation des paramètres de la composante linéaire du modèle électrique sans dérivation comprenant :

     ▪ une phase (P411) de détermination d'une caractéristique linéaire de sorte à obtenir $I_{lineaire}(V)$ ;
     ▪ une phase (P412) de détermination de la régression linéaire de l'équation $Y = a_{sc} \times W + b_{sc}$ à partir de la courbe $I_{lineaire}(V)$ ;
     ▪ une phase (P413) de détermination des paramètres de la composante linéaire du modèle à partir de ladite régression ;

- une deuxième sous-étape (E42) d'optimisation des paramètres de la composante exponentielle du modèle électrique sans dérivation comprenant :

  - une phase (P421) de détermination d'une caractéristique V-I linéaire de sorte à obtenir $V_{lineaire}(I)$ ;
  - une phase (P422) de détermination de la régression linéaire de l'équation $W = a_{oc} \times Y + b_{oc}$ à partir de la courbe $V_{lineaire}(I)$ ;
  - une phase (P423) de détermination des paramètres de la composante exponentielle du modèle à partir de ladite régression ;

  lesdites première et deuxième sous-étapes étant itérées une pluralité de fois de sorte à obtenir un modèle électrique sans dérivation.

7. Procédé selon l'une des revendications précédentes **caractérisé en ce que** l'étape (E5) de détermination des paramètres du modèle électrique avec dérivation comprend :

   - une première sous-étape (E51) d'initialisation du premier paramètre $P_d$ et du deuxième paramètre $P_l$ caractéristiques de la dérivation ;
   - une deuxième sous-étape (E52) de détermination, à partir des paramètres $P_d$ et $P_l$, de la caractéristique $W_{mod}(Y)$ associée au modèle avec dérivation ;
   - une troisième sous-étape (E53) d'optimisation des paramètres $P_d$ et $P_l$ du modèle avec dérivation $W_{mod}(I)$
   - une quatrième sous-étape (E54) de déformation, à partir des paramètres $P_d$ et $P_l$, de la courbe $I(V)$ de sorte à obtenir une caractéristique $I(V_{unshaded})$ sans dérivation ;
   - une cinquième sous-étape (E55) d'optimisation des paramètres du modèle électrique sans dérivation à partir d'un caractéristique de référence $I(V_{ref})$ égale à $I(V_{unshaded})$ ;

   les deuxième, troisième, quatrième et cinquième sous-étapes étant itérées une pluralité de fois de sorte à obtenir un modèle électrique avec dérivation à partir du modèle sans dérivation réévalué et des paramètres $P_d$ et $P_l$.

8. Procédé de détection d'une anomalie dans une chaine de modules photovoltaïques **caractérisé en ce qu'**il comprend :

   - une étape de détermination du modèle électrique de la chaine de modules à l'aide d'un procédé selon l'une des revendications précédentes ;
   - une étape de détection d'une anomalie en fonction de la valeur d'au moins un paramètre du modèle électrique déterminé.

9. Dispositif de traitement de données comprenant des moyens de mettre en œuvre le procédé selon l'une des revendications précédentes.

10. Programme d'ordinateur comprenant des instructions qui, lorsque le programme est exécuté par un ordinateur, conduisent celui-ci à mettre en œuvre le procédé selon l'une des revendications 1 à 8.

100

FIG. 1

Diodes de bypass

+

Cellule    Module     Chaine de
cellules en série

## FIG. 2

$I_{ph}$

$R_s$

$I_0$

$R_p$

$V_{th}$

## FIG. 3

E1

E11

E12

FIG. 4

FIG. 5

FIG. 6

E2

E21

E22

FIG. 7

FIG. 8

FIG. 9

FIG. 10

FIG. 11

E5

E51

E52 → P521 → P522

E53

E54

E55

FIG. 12

FIG. 13

FIG. 14

**Europäisches Patentamt**
**European Patent Office**
**Office européen des brevets**

# RAPPORT DE RECHERCHE EUROPEENNE

Numéro de la demande

EP 19 20 8796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | CHINE W ET AL: "Fault diagnosis in photovoltaic arrays", 2015 INTERNATIONAL CONFERENCE ON CLEAN ELECTRICAL POWER (ICCEP), IEEE, 16 juin 2015 (2015-06-16), pages 67-72, XP033186603, DOI: 10.1109/ICCEP.2015.7177602 * abrégé * * section II * * section III.C * * section IV.C * * section VI * * tableau 1 * * figure 2 * * le document en entier * | 1-10 | INV. H02S50/00 G06F30/00 G06F111/10 |
| X | HARROU FOUZI ET AL: "A robust monitoring technique for fault detection in grid-connected PV plants", 2018 7TH INTERNATIONAL CONFERENCE ON RENEWABLE ENERGY RESEARCH AND APPLICATIONS (ICRERA), IEEE, 14 octobre 2018 (2018-10-14), pages 594-598, XP033469621, DOI: 10.1109/ICRERA.2018.8566768 * abrégé * * section II * * section V * * Algorithme 1 * * le document en entier * -/-- | 1-10 | DOMAINES TECHNIQUES RECHERCHES (IPC) G06F H02S |

Le présent rapport a été établi pour toutes les revendications

| Lieu de la recherche | Date d'achèvement de la recherche | Examinateur |
|---|---|---|
| Munich | 20 mars 2020 | Joris, Pierre |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
& : membre de la même famille, document correspondant

Europäisches Patentamt
European Patent Office
Office européen des brevets

**RAPPORT DE RECHERCHE EUROPEENNE**

Numéro de la demande

EP 19 20 8796

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | REZGUI WAIL ET AL: "Modeling of a photovoltaic field in malfunctioning", 2013 INTERNATIONAL CONFERENCE ON CONTROL, DECISION AND INFORMATION TECHNOLOGIES (CODIT), IEEE, 6 mai 2013 (2013-05-06), pages 788-793, XP032534839, DOI: 10.1109/CODIT.2013.6689643 * abrégé * * Section II.A et B * * section III.B * * le document en entier * ----- | 1-10 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 20 mars 2020 | Joris, Pierre |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
........................................................
& : membre de la même famille, document correspondant

EPO FORM 1503 03.82 (P04C02)

page 2 de 2

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **BATZELIS, E. I. ; GEORGILAKIS, P. S. ; PAPATHANASSIOU, S. A.** Energy models for photovoltaic systems under partial shading conditions: a comprehensive review. *IET Renewable Power Génération,* 2014, vol. 9 (4), 340-349
- **BATZELIS, E. ; PAPATHANASSIOU, S. A.** An Algorithm to Detect Partial Shading Conditions in a PV System. *In Materials Science Forum,* 2016, vol. 856, 303-308

- **DANS JORDEHI, A. R.** Parameter estimation of solar photovoltaic (PV) cells: a review. *Renewable and Sustainable Energy Reviews,* 2016, vol. 61, 354-371
- **EL BASRI, Y. ; BRESSAN, M. ; SEGUIER, L. ; AL-AWADHI, H. ; ALONSO, C.** A proposed graphical electrical signatures supervision method to study PV module failures. *Solar Energy,* 2015, 116